# EUROPÄISCHE PATENTANMELDUNG

(11) **EP 3 205 845 A1**
(43) Veröffentlichungstag der Anmeldung: **16.08.2017**
(21) Anmeldenummer: 17153675.8
(22) Anmeldetag: 30.01.2017
(51) Int. Cl.: F01D 25/24

(54) **ABGASTURBOLADER**

(30) Priorität: 10.02.2016 DE 102016001496
(71) Anmelder: Audi AG, 85045 Ingolstadt (DE)
(72) Erfinder: Köhnlein, Maximilian, 85139 Wettstetten (DE); Edmüller, Florian, 85084 Reichertshofen (DE)

(57) **Zusammenfassung**

Die Erfindung betrifft einen Abgasturbolader (2), der als Komponenten ein Turbinengehäuse (6) und ein Lagergehäuse (4) aufweist, wobei jede Komponente einen Flanschrand (8, 10) aufweist, wobei zwischen Flanschrändern (8, 10) beider Komponenten ein Ring (12) aus Blech angeordnet ist, wobei die Flanschränder (8, 10) beider Komponenten zum Bereitstellen eines Flansches miteinander verbunden sind.

## Beschreibung

Die Erfindung betrifft einen Abgasturbolader und ein Verfahren zum Herstellen eines Abgasturboladers.

Ein Abgasturbolader für eine Abgasanlage eines Kraftfahrzeugs umfasst als Komponenten ein Turbinengehäuse und ein Lagergehäuse. Diese in der Regel voneinander getrennten Gehäuse sind zum Bereitstellen des Abgasturboladers miteinander abgasdicht zu verbinden.

Diesbezüglich ist aus der Druckschrift DE 10 2009 005 013 A1 eine Verbindungsanordnung eines Turbinengehäuses mit einem Lagergehäuse eines Abgasturboladers bekannt. Ein Abgasturbolader mit einem ersten und einem zweiten Gehäuseabschnitt ist aus der Druckschrift DE 10 2013 111 561 A1 bekannt. Hierbei wird zum Abdichten von Flanschflächen der Gehäuseabschnitte eine radial oder halbradial wirkende Dichtung verwendet. Ein ähnlicher Abgasturbolader ist aus der Druckschrift DE 10 2013 111 562 A1 bekannt.

Vor diesem Hintergrund werden ein Abgasturbolader und ein Verfahren mit den Merkmalen der unabhängigen Patentansprüche vorgestellt. Ausgestaltungen des Abgasturboladers und des Verfahrens gehen aus den abhängigen Patentansprüchen und der Beschreibung hervor.

Der erfindungsgemäße Abgasturbolader weist als Komponenten ein Turbinengehäuse und ein Lagergehäuse auf, wobei jede Komponente einen Flanschrand aufweist. Zwischen Flanschrändern beider Komponenten ist ein Ring aus Blech angeordnet, bspw. eingeklemmt. Die Flanschränder beider Komponenten sind zum Bereitstellen eines Flansches miteinander verbunden.

In Ausgestaltung ist der Ring aus Blech und somit ein Blechring aus Metall zwischen den Flanschrädern beider Komponenten axial anzuordnen. Weiterhin ist möglich, dass der Ring aus Blech eine Beschichtung aufweist.

Die beiden Komponenten sind an dem Flansch über eine Schelle miteinander verbunden, wobei die Schelle beide Flanschränder umgreift.

Mit dem Ring aus Blech ist für den Flansch eine kraftnebenschlüssige Dichtung bereitzustellen.

Mindestens eine der beiden Komponenten, d. h. lediglich eine Komponente oder beide Komponenten, weist in einem Flanschrand eine umlaufende, kreisförmige Nut auf, in der der Ring aus Blech teilweise anzuordnen und/oder angeordnet ist. Dabei ist eine Tiefe der Nut geringer als eine bspw. axiale Höhe einer Querschnittsfläche des Rings aus Blech. Dabei ist die Querschnittsfläche durch einen Innenradius, einen Außenradius sowie die axial orientierte Höhe des Rings begrenzt.

Das erfindungsgemäße Verfahren ist zum Herstellen eines Abgasturboladers vorgesehen, der als Komponenten ein Turbinengehäuse und ein Lagergehäuse aufweist, wobei jede Komponente einen Flanschrand aufweist. Dabei wird zwischen Flanschrändern beider Komponenten ein Ring aus Blech angeordnet, bspw. eingeklemmt, wobei die Flanschränder beider Komponenten zum Bereitstellen eines Flansches miteinander verbunden werden.

Eine Dichtigkeit des Flansches zwischen dem Turbinengehäuse und dem Lagergehäuse wird bei einer niedrigen Temperatur, die geringer als ein Grenzwert ist und maximal 200°C beträgt, getestet. In Ausgestaltung wird die Dichtigkeit des Flansches getestet, wenn der Abgasturbolader mit einem Verbrennungsmotor verbunden ist.

Durch Vorsehen des Blechrings bzw. des Rings aus Blech in einem Bereich des Flansches, über den das Turbinengehäuse und das Lagergehäuse miteinander zu verbinden sind, wird eine Kalttestfähigkeit des Abgasturboladers ermöglicht. Hierzu wird in dem Bereich des Flansches von dem Turbinengehäuse zu dem Lagergehäuse bzw. von dem Lagergehäuse zu dem Turbinengehäuse der Ring aus Blech eingesetzt.

Mit diesem Ring wird eine Luftdichtigkeit des Flansches unter Randbedingungen eines Kalttests des Abgasturboladers gewährleistet. Dabei wird mit dem Ring aus Blech zwischen den Flanschrändern der beiden Komponenten im Kraftnebenschluss eine Dichtung bereitgestellt. Dabei ist eine dichtende Wirkung des Rings bei einem Normalbetrieb des Abgasturboladers und somit bei hohen Temperaturen nicht zwingend erforderlich.

Zum Herstellen des Abgasturboladers bzw. bei dessen Montage wird der Ring aus Blech auf einem Flanschrand einer der beiden Komponenten, d. h. entweder auf dem Turbinengehäuse oder dem Lagergehäuse aufgelegt. Bei einem Aneinanderfügen der beiden Komponenten wird der Ring zwischen den aneinanderzufügenden Flanschrändern vorgespannt. Der Ring aus Blech ist derart ausgelegt, dass eine benötigte axiale Vorspannkraft leicht erhöht wird, da eine dichtende Wirkung des Rings üblicherweise nur im kalten Zustand zu erreichen ist. Somit ist ein Einsatz einer größeren Schelle, bspw. einer größeren V-Band-Schelle, nicht erforderlich. Weiterhin ist der Ring aus einem Werkstoff gefertigt, der auf niedrige Temperaturen ausgelegt ist und somit nicht auf hohe Temperaturen ausgelegt werden muss.

Nach einer Montage des Abgasturboladers an einem Verbrennungsmotor wird ein Kalttest durchgeführt. Dabei ist vorgesehen, dass der Ring im Bereich des Flansches bei einem Überdruck von 0,30 bar bei Raumtemperatur eine Luftdichtigkeit des Flansches gewährleistet. Da der Motor beim Kalttest nicht befeuert wird, ist nicht erforderlich, den Ring aus Blech auf einen hohen Temperaturbereich auszulegen. Somit ist bspw. bei einer Temperatur, die größer als 200 °C ist, eine dichtende Wirkung des Blechrings nicht erforderlich. Alternativ oder ergänzend ist möglich, dass der Ring derart ausgelegt ist, dass er auch bei hohen Temperaturen eine dichtende Wirkung bietet.

Ein bspw. metallischer Werkstoff, aus dem der Ring zu bilden bzw. herzustellen ist, wird Anforderungen, die an den Ring gestellt werden, gerecht, wobei derartige Anforderungen je nach Anwendungsfall unterschiedlich sein können. Üblicherweise sind bei der Wahl des Werkstoffs Anforderungen einer Dichtigkeit des Rings nach Parametern des Kalttests zu berücksichtigen.

Hinsichtlich einer stationären Beanspruchung des Rings im Kalttest, ist der für den Ring zu verwendende Werkstoff nach der Norm EN ISO 16120-2 (Stand 2016) auszuwählen. Hierbei ist in Ausgestaltung mindestens ein Werkstoff bzw. Material nach SL, SM und SH der Norm EN ISO 16120-2 auszuwählen, das für die stationäre Belastung im Kalttest geeignet ist. Weiterhin ist für den Ring mindestens ein Werkstoff auszuwählen, der für eine Beanspruchung in einem dynamischen Lastfall geeignet ist.

Eine Form des Rings ist unter Berücksichtigung einer Form einer Schnittstelle zwischen den beiden Komponenten des Turbinengehäuses und des Lagergehäuses, bspw. unter Berücksichtigung einer Form der Nut, zwischen den Komponenten individuell auszulegen, wobei die Form und eine Auslegung nach Funktionsanforderungen an die Dichtigkeit im Kalttest auszuwählen ist. Alternativ oder ergänzend ist vorgesehen, dass die Dichtigkeit auch bei höheren Temperaturen zu gewährleisten ist.

Außerdem können auch Werkstoffe verwendet werden, die in EN ISO 16120-2 nicht aufgeführt sind, sofern die Funktionsanforderung der Dichtigkeit im Kalttest gegeben ist.

Der Ring kann weiterhin eine Beschichtung aufweisen. Ferner ist der Ring unter Berücksichtigung der Norm DIN 6796 (Stand 2016) auszubilden. In diesem Fall ist der Ring als Spannscheibe und/oder Tellerfeder ausgebildet.

Je nach Definition der Schnittstelle zwischen den beiden Komponenten sind eine Federvorspannkraft und eine Kennlinie des Rings zu wählen und/oder zu variieren.

Der für den Abgasturbolader zum Abdichten des Flansches vorgesehene Ring aus Blech ergänzt eine Schelle, bspw. V-Band-Schelle, mit der das Turbinengehäuse und das Lagergehäuse im Bereich des Flansches miteinander verbunden sind. Zum Bereitstellen des Flansches ist weiterhin möglich, die metallischen Flanschränder der beiden Komponenten als Kontaktpartner miteinander axial zu verpressen. Somit kann bei einem Temperaturbereich von ca. -40 °C bis weit über 1000 °C, bei dem der Abgasturbolader betrieben wird, eine Luftdichtigkeit gewährleistet werden. Üblicherweise ist der Ring aus Blech bei unterschiedlichen Flanschen bzw. Flanschverbindungen, bspw. bei einer Verbindung durch einen Schraubflansch, einsetzbar.

Bei dem vorgesehenen Kalttest, der üblicherweise in einem Werk durchgeführt wird, in dem ein Verbrennungsmotor und/oder eine Abgasanlage hergestellt wird, der bzw. die den Abgasturbolader aufweist, werden Grundfunktionen und Grundeigenschaften des Abgasturboladers geprüft. Hierbei wird auch ein Ölraum des Verbrennungsmotors auf Dichtigkeit überprüft. Hierzu wird im Ölraum des Verbrennungsmotors ein Druck aufgebracht, bei dem eine vordefinierte Leckagemenge an Öl nicht überschritten werden darf. Durch Einsatz des Rings aus Blech können in dem Bereich des Flansches von dem Turbinengehäuse zu dem Lagergehäuse ansonsten auftretende hohe Leckraten vermieden werden. Somit ist möglich, im Kalttest den kompletten Verbrennungsmotor und/oder die komplette Abgasanlage inklusive Abgasturbolader zu testen.

Der für den Flansch vorgesehene Ring aus Blech ist als gesonderte Dichtung zwischen den beiden Flanschrändern kraftnebenschlüssig anzuordnen, wodurch auch im kalten Zustand des Abgasturboladers eine Dichtwirkung zu erreichen ist. Dabei ist möglich, den Ring auch in einer Nut des Flanschrands einer der beiden Komponenten anzuordnen.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in den Zeichnungen schematisch dargestellt und wird unter Bezugnahme auf die Zeichnungen schematisch und ausführlich beschrieben.
Figur 1 zeigt in schematischer Schnittdarstellung ein Detail einer Ausführungsform des erfindungsgemäßen Abgasturboladers.
Figur 2 zeigt einen vergrößerten Ausschnitt aus Figur 1.

Die hier vorgestellte Ausführungsform des erfindungsgemäßen Abgasturboladers 2 umfasst als Komponenten ein Lagergehäuse 4 und ein Turbinengehäuse 6. Hierbei sind ein Flanschrand 8 des Lagergehäuses 4 und ein Flanschrand 10 des Turbinengehäuses 6 aneinander axial angeordnet.

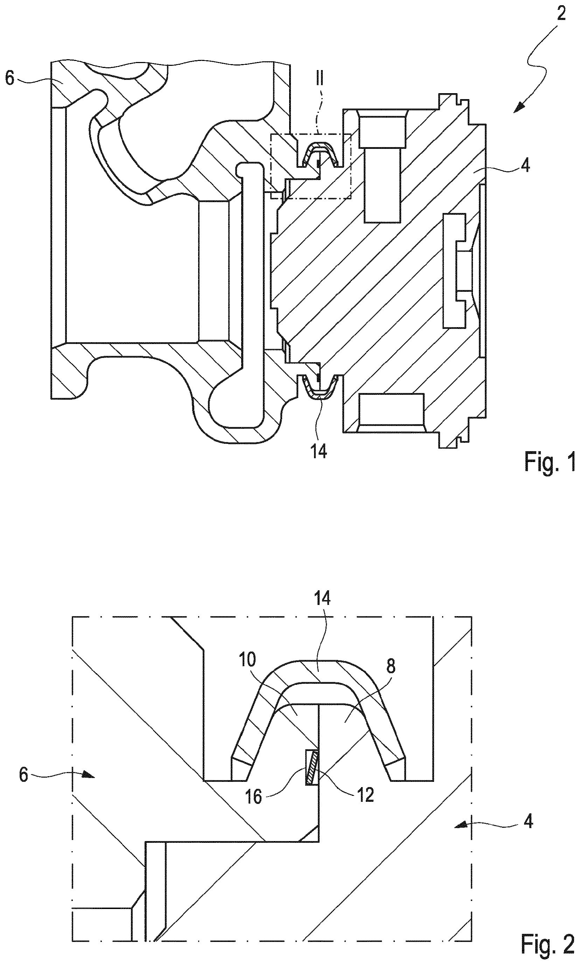

Hierzu wird auch auf den in Figur 2 vergrößert dargestellten Ausschnitt II in Figur 1 verwiesen. Zwischen den beiden Flanschrändern 8, 10 ist hier ein Ring 12 aus Blech angeordnet. Die beiden Flanschräder 8, 10 sind weiterhin über eine hier V-förmige-Schelle 14, die die Flanschräder 8, 10 umschließt, miteinander verbunden. Weiterhin ist hier vorgesehen, dass der Ring 12 aus Blech innerhalb einer Nut 16 im Flanschrand 10 des Turbinengehäuses 6 angeordnet ist.

## Patentansprüche

1. Abgasturbolader, der als Komponenten ein Turbinengehäuse (6) und ein Lagergehäuse (4) aufweist, wobei jede Komponente einen Flanschrand (8, 10) aufweist, wobei zwischen Flanschrändern (8, 10) beider Komponenten ein Ring (12) aus Blech angeordnet ist, wobei die Flanschränder (8, 10) beider Komponenten zum Bereitstellen eines Flansches miteinander verbunden sind.

2. Abgasturbolader nach Anspruch 1, bei dem die beiden Komponenten an dem Flansch über eine Schelle (14) miteinander verbunden sind, wobei die Schelle (14) beide Flanschränder (8, 10) umgreift.

3. Abgasturbolader nach Anspruch 1 oder 2, bei dem mit dem Ring (12) aus Blech eine kraftnebenschlüssige Dichtung bereitzustellen ist.

4. Abgasturbolader nach einem der voranstehenden Ansprüche, bei dem mindestens eine der beiden Komponenten in einem Flanschrand (8, 10) eine Nut (16) aufweist, in der der Ring (12) aus Blech angeordnet ist.

5. Abgasturbolader nach Anspruch 4, bei dem eine Tiefe der Nut (16) geringer als eine axial orientierte Höhe des Rings aus Blech (12) ist.

6. Verfahren zum Herstellen eines Abgasturboladers (2), der als Komponenten ein Turbinengehäuse (6) und ein Lagergehäuse (4) aufweist, wobei jede Komponente einen Flanschrand (8, 10) aufweist, wobei zwischen Flanschrändern (8, 10) beider Komponenten ein Ring (12) aus Blech angeordnet wird, wobei die Flanschränder (6) beider Komponenten zum Bereitstellen eines Flansches miteinander verbunden werden.

7. Verfahren nach Anspruch 6, bei dem eine Dichtigkeit des Flansches zwischen dem Turbinengehäuse (6) und dem Lagergehäuse (4) bei einer Temperatur, die geringer als ein Grenzwert ist, getestet wird.

8. Verfahren nach Anspruch 7, bei dem die Dichtigkeit des Flansches getestet wird, wenn der Abgasturbolader (2) mit einem Verbrennungsmotor verbunden ist.
